# EUROPÄISCHE PATENTSCHRIFT

(11) **EP 2 029 315 B1**
(45) Veröffentlichungstag und Bekanntmachung des Hinweises auf die Patenterteilung: **28.11.2012**
(21) Anmeldenummer: 06753861.1
(22) Anmeldetag: 24.05.2006
(51) Int. Cl.: B23K 37/04, B23K 26/10, B26D 7/20

(54) **VORRICHTUNG ZUR AUFNAHME VON PLATTENFÖRMIGEN MATERIALIEN FÜR ZUMINDEST EINEN TRENNVORGANG**
DEVICE FOR SUPPORTING SHEET MATERIALS FOR AT LEAST ONE SEPARATING PROCESS
DISPOSITIF DESTINÉ À RECEVOIR DES MATÉRIAUX SOUS FORME DE PLAQUES POUR AU MOINS UN PROCESSUS DE SÉPARATION

(43) Veröffentlichungstag der Anmeldung: 04.03.2009
(73) Patentinhaber: TRUMPF Werkzeugmaschinen GmbH + Co. KG, 71254 Ditzingen (DE)
(72) Erfinder: WAHL, Eberhard, 73235 Weilheim (DE); BLASER, Martin, 88267 Vogt (DE)
(74) Vertreter: Maser, Jochen
(86) Internationale Anmeldenummer: PCT/EP2006/004987
(87) Internationale Veröffentlichungsnummer: WO 2007/134629

(56) Entgegenhaltungen:
- DE-A1- 4 242 373
- DE-C1- 3 625 799
- DE-U1- 20 112 006
- FR-A1- 2 713 130
- JP-A- 4 356 394
- JP-A- 9 327 786
- JP-A- 11 123 580

## Beschreibung

Die Erfindung betrifft eine Vorrichtung zur Aufnahme von plattenförmigen Materialien für zumindest einen Trennvorgang im plattenförmigen Material mit einer Schneidstrahleinrichtung einer Bearbeitungsmaschine gemäß dem Oberbegriff des Anspruchs 1.

Aus der JP 4-19884 oder der FR-A-2713130 geht eine Laserbearbeitungsmaschine hervor, welche eine Vorrichtung zur Aufnahme von plattenförmigen Materialien für zumindest einen Trennvorgang im plattenförmigen Material umfasst. Durch eine Schneidstrahleinrichtung wird das plattenförmige Material bearbeitet. Dabei liegt das plattenförmige Material auf einem Auflagetisch auf, der eine erste und zweite Auflagefläche umfasst. Dazwischenliegend ist eine Strahlfangvorrichtung vorgesehen. Ein während der Bearbeitung des plattenförmigen Materials nach unten austretender Schneidstrahl wird von der Strahlfangvorrichtung aufgenommen, so dass das bandförmige Material, welches zur Bildung der ersten und zweiten Auflagefläche eingesetzt ist, einer verringerten Beanspruchung unterzogen wird. Bei dieser Vorrichtung wird über einen Elektromotor ein Gehäuse relativ zu feststehenden Umlenkachsen des bandförmigen Materials bewegt, wodurch die Auflageflächen in der Größe variabel sind.

Diese Vorrichtung ist für kleine und leichte Größen des plattenförmigen Materials ausgebildet. Darüber hinaus kann eine Verkippung oder Beeinträchtigung der Lage des plattenförmigen Materials aufgrund von einer Durchbiegung der bandförmigen Auflagefläche erfolgen. Gleichzeitig kann aufgrund des ruhenden Werkstücks und der in dem Schneidspalt verbleibenden Restwärme unmittelbar nach dem Verfahren der Strahlfangvorrichtung eine Beschädigung der bandförmigen Auflagefläche durch die erhitzten Randbereiche, durch anhaftende Schlackereste an den Schneidkanten oder durch Verschmutzung kommen.

Aus der JP 2002-37891 A2 geht ein Auflagetisch mit einer ersten und zweiten Auflagefläche hervor, welcher durch eine linienförmige Strahlfangvorrichtung getrennt ist. Diese erste und zweite Auflagefläche wird durch zueinander beabstandete pinselförmige Bürsten vorgesehen, die eine erste und zweite Auflagefläche bilden. Diese Auflageflächen sind fest zur Eintrittsöffnung der Strahlfangvorrichtung vorgesehen, welche mit einer Bürstenleiste ausgebildet ist. Bei dieser Anordnung wird zwar eine stabile Auflage ermöglicht, jedoch ist zur Herstellung von Teilen aus dem plattenförmigen Material erforderlich, dass das Werkstück auf der ersten und zweiten Auflagefläche in X-Richtung verschiebbar angesteuert wird. Dies weist den Nachteil auf, dass bei sehr kleinen Teilen ein Verhaken mit den pinselförmigen Bürstenelementen gegeben sein kann.

Aus der JP 2001-121228 A2 geht des Weiteren eine Bearbeitungsmaschine für plattenförmige Materialien mit einem Laserschneidkopf hervor, welche eine erste und zweite Auflagefläche aufweisen, die durch pinselförmige Bürsten ausgebildet sind. Diese Auflageflächen sind an einem geneigten Tisch vorgesehen. Zur Bearbeitung des darauf aufliegenden Werkstückes mit einem Laserschneidstrahl werden diese mit pinselförmigen Bürsten versehenen Tische zu einem Staubabsaugkanal durch eine Schwenkbewegung positioniert. Dadurch ist eine sehr aufwändige Maschinenanordnung gegeben, wobei das plattenförmige Material zur Bearbeitung quer zur Bearbeitungsrichtung des Laserschneidkopfes verfahren wird. Dadurch können Beschädigungen an den geschnittenen Teilen sowie ein Verbacken der Teile mit der Auflage gegeben sein.

Der Erfindung liegt deshalb die Aufgabe zugrunde, eine Vorrichtung zur Aufnahme von plattenförmigen Materialien für zumindest einen Trennvorgang im plattenförmigen Material zu schaffen, welche einen geringen Verschleiß, schmutzunempfindliche Auflageflächen sowie ein Verbacken der Gutteile mit den Auflageflächen als auch eine Beschädigung der Gutteile durch Strahlreflexion oder Rückspritzer verringert oder vermeidet.

Diese Aufgabe wird erfindungsgemäß durch die Merkmale des Anspruchs 1 gelöst. Weitere vorteilhafte Ausgestaltungen und Weiterbildungen sind in den weiteren Ansprüchen angegeben.

Durch die Ausgestaltung eines Auflagetisches mit einer ersten und zweiten Auflagefläche, welche aus einem nachgiebigen und temperaturbeständigen Material ausgebildet ist, in welchem eine verfahrbare Strahlfangvorrichtung zumindest teilweise eingebettet ist und in der zumindest teilweise eingebetteten Position verfahrbar im Auflagetisch vorgesehen ist, wird ermöglicht, dass gleichbleibende Arbeitsbedingungen für das auf dem Auflagetisch aufliegende plattenförmige Material unabhängig der Position der Strahlfangvorrichtung bestehen. Es können schwere plattenförmige Materialien oder Werkstücke zur Bearbeitung aufgelegt werden, die unabhängig von der Position der Strahlfangvorrichtung eine gleichbleibende Lage beibehalten. Des Weiteren wird durch die verfahrbare Anordnung der Strahlfangvorrichtung eine Beschädigung der geschnittenen Gutteile durch Strahlreflexion oder Rückspritzer verhindert, da der auf der Unterseite austretende Schneidstrahl und gegebenenfalls erfolgende Rückspritzer durch die Strahlfangvorrichtung aufgefangen werden. Dadurch wird trotz der ruhenden Auflage des plattenförmigen Materials auf dem Auflagetisch und der aus temperaturbeständigem Material ausgebildeten Auflagefläche ein Verbacken der Gutteile und der Restteile mit der ersten und zweiten Auflagefläche verhindert. Des Weiteren wird durch die ruhende Auflage des zu bearbeitenden plattenförmigen Materials ein kratzfreies Bearbeiten ermöglicht.

Als nachgiebiges und temperaturbeständiges Material zur Bildung der Auflageflächen sind eine Vielzahl von Borsten oder aneinander gereihte, aus Borsten bestehende Bürsten, Bürstenpinsel oder Bürstenfelder vorgesehen. Eine solche Bürstenauflage weist den Vorteil auf, dass in einer einfachen Weise eine zumindest teilweise Einbettung der Strahlfangvorrichtung ermöglicht und eine gute Verfahrbarkeit der Strahlfangvorrichtung innerhalb des Auflagetisches durch Auslenken der Borsten gegeben ist. Der Einsatz von Bürsten, Bürstenpinseln oder Bürstenfelder ermöglicht des Weiteren einen schnellen und einfachen Austausch. Die Materialien der Borsten können dadurch auch an den zu bearbeitenden Werkstoff in einfacher Weise und innerhalb kurzen Rüstzeiten angepasst werden.

Die Borstenenden der Bürsten sind bevorzugt in einer gemeinsamen Auflageebene liegend vorgesehen, die die erste und zweite Auflagefläche bilden. Dadurch kann durch eine Vielzahl von Einzelelementen eine stabile und tragfähige Auflagefläche geschaffen werden.

Nach einer vorteilhaften Ausgestaltung der Erfindung ist vorgesehen, dass die Borsten aus einem temperaturbeständigen Kunststoffmaterial oder leitfähigen und temperaturbeständigen Kunststoffmaterial ausgebildet sind. Die leitfähige Ausgestaltung ermöglicht zusätzlich, dass eine Erdung des plattenförmigen Materials über die leitenden Borstenmaterialien anstelle über das plattenförmige Material erfolgen kann, welches über Pratzen beziehungsweise Fixiereinrichtungen in einer definierten Position auf der Werkstückauflage gehalten ist. Alternativ kann anstelle der aus Kunststoff ausgebildeten Borsten ein metallisch leitendes Material vorgesehen sein, welches bevorzugt als Drähte ausgebildet ist. Dabei werden Materialien ausgewählt, die im Wesentlichen gleiche Werkstoffeigenschaften wie das zu bearbeitende plattenförmigen Material umfassen.

Die Ausgestaltung der Borsten für die pinselförmigen Bürsten, Bürstenfelder oder Bürstenleisten werden bevorzugt in Abhängigkeit der Parameter wie Stärke der Borsten, Eigensteifigkeit der Borsten und die freie Weglänge der Borsten ausgewählt. Dadurch kann erzielt werden, dass nach dem Auslenken und Überfahren der Borsten durch die Strahlfangvorrichtung ein selbstständiges Zurücksetzen in eine Ausgangsposition beziehungsweise Auflageposition ohne bleibende Verformung ermöglicht ist. Dadurch kann eine lange Lebensdauer dieser Auflagetische gegeben sein.

Nach einer weiteren vorteilhaften Ausgestaltung der Erfindung ist vorgesehen, dass die in die Auflagefläche eingebettete Strahlfangvorrichtung einen Gehäuseabschnitt aufweist, der quer zur Verfahrrichtung als ein U- oder V-förmiger Querschnitt ausgebildet ist. Dadurch kann ein sanftes Auslenken der einzelnen Borsten aus einer das plattenförmige Material stützenden Position ermöglicht werden: Gleichzeitig wird eine Stauchung der Borsten bei einer Richtungsumkehr verhindert, da die ausgelenkten Borsten nur auf einem Seitenabschnitt des eingetauchten Gehäuses der Strahlfangvorrichtung anliegen.

Als nachgiebiges und temperaturbeständiges Medium können vorteilhafterweise Bürstenleisten vorgesehen sein, welche sich segmentweise beim Verfahren der Strahlfangvorrichtung gegenüber einer Auflageebene der ersten und zweiten Auflagefläche nach unten absenken. Dadurch wird ermöglicht, dass die Strahlfangvorrichtung ungehindert oder nahezu ungehindert in einer eingebetteten Position verfahrbar ist. Die Bürstenleisten können mit einer Vielzahl von einzelnen Borsten vorgesehen sein.

Nach einer bevorzugten Ausgestaltung ist vorgesehen, dass die Auslenkung der Bürstenleisten beziehungsweise das Absenken der Bürstenleisten durch eine Kulisse gesteuert wird, die mit der Strahlfangvorrichtung gekoppelt ist. Dadurch ist eine einfache konstruktive Ausgestaltung und unmittelbare Koppelung der Verfahrstrecke der Strahlfangvorrichtung mit der Absenkbewegung der segmentweise ausgebildeten Bürstenleisten gegeben.

Nach einer weiteren vorteilhaften Ausgestaltung der Erfindung ist vorgesehen, dass auf dem nachgiebigen und temperaturbeständigen Medium eine hitzebeständige und flexible Schicht vorgesehen ist. Diese Schicht dient zum Schutz, z.B. vor Hitze oder Schmutz, wie Schlacke oder Kleinteile, des nachgiebigen und temperaturbeständigen Mediums. Diese Bürstenleisten können durch Borsten oder sonstigen segmentweise ausgebildeten Elementen bestehen, welche eine Tragfunktion übernehmen und beispielsweise in mehreren Reihen nebeneinander anordenbar sind. Gleichzeitig kann diese Schicht als Gleitschicht für die Strahlfangvorrichtung dienen.

Bevorzugt ist die Schicht als elastisches Gewebe oder elastische Folie ausgebildet. Dieses elastische Gewebe kann als thermisches Isoliergewebe ausgebildet sein. Alternativ kann auch ein Vlies, Gewirke oder dergleichen mit hitzebeständigen Eigenschaften eingesetzt werden.

Die Erfindung sowie weitere vorteilhafte Ausführungsformen und Weiterbildungen derselben werden im Folgenden anhand der in den Zeichnungen dargestellten Beispiele näher beschrieben und erläutert. Es zeigen:
- Figur 1: Eine perspektivische Darstellung einer erfindungsgemäßen Ausführungsform der Vorrichtung,
- Figur 2: eine schematische Schnittdarstellung der erfindungsgemäßen Vorrichtung gemäß Figur 1 während dem Be- oder Entladen des plattenförmigen Materials und
- Figur 3: eine schematische Schnittdarstellung einer alternativen Ausführungsform der Erfindung.

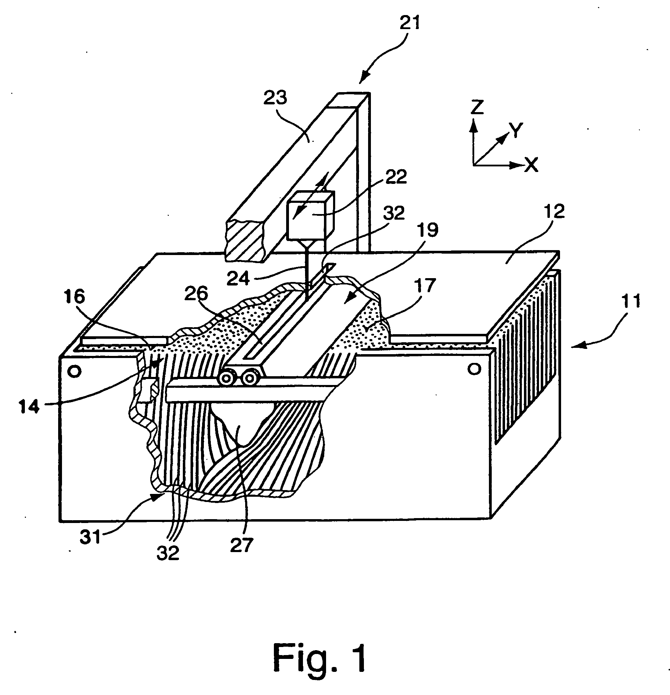

In Figur 1 ist perspektivisch eine erfindungsgemäße Vorrichtung 11 zur Aufnahme eines Werkstücks beziehungsweise plattenförmigen Materials 12 dargestellt. Diese Vorrichtung 11 umfasst einen Auflagetisch 14, der aus einer ersten und zweiten Auflagefläche 16, 17 gebildet ist. Die Vorrichtung 11 ist Teil eines nicht näher dargestellten Maschinenbettes oder bildet ein Maschinenbett in einer Bearbeitungsmaschine 21, insbesondere einer Laserschneidmaschine oder Brennstrahlschneidmaschine. Zur Bearbeitung eines plattenförmigen Materials 12 auf dem Auflagetisch 14 wird über einen Schneidkopf 22, der bevorzugt an einem Linearachsensystem 23 verfahrbar angeordnet ist, ein Schneidstrahl 24 auf das plattenförmige Material 12 gerichtet. Der Schneidstrahl 24 tritt auf einer Unterseite des Werkstücks 12 aus und tritt über eine linienförmige Öffnung 26 in ein Gehäuse 27 einer Strahlfangvorrichtung 19 ein. Zwischen der ersten und zweiten Auflagefläche 16, 17 ist die Strahlfangvorrichtung 19 vorgesehen, welche in X-Richtung verfahrbar ist. Der Schneidkopf 22 ist zur Bearbeitung des gesamten plattenförmigen Materials 12 zusätzlich zur X-Richtung in Y-Richtung verfahrbar. Die Strahlfangvorrichtung 19 ist zum Schneidkopf 22 bezüglich dessen Bewegung in X-Richtung gekoppelt, so dass ein Eintritt des Schneidstrahles 24 in die Strahlfangvorrichtung 19 sichergestellt ist. Beim Verfahren der Strahlfangvorrichtung 19 in oder entgegen der X-Richtung vergrößert oder verkleinert sich die erste Auflagefläche 16 und zweite Auflagefläche 17 entsprechend.

Alternativ zur vorbeschriebenen Strahlfangvorrichtung, welche als sogenannter Linien-Catcher ausgebildet ist, kann auch eine Strahlfangvorrichtung vorgesehen sein, welche eine punktförmige Eintrittsöffnung für den Schneidstrahl umfasst, wobei diese Strahlfangvorrichtung in X- und Y-Richtung über der Auflagefläche 16, 17 verfahrbar vorgesehen ist. Auch eine solche Strahlfangvorrichtung, die auch als "Punkt-Catcher" bezeichnet wird, kann in dem Auflagetisch 14 eingebettet vorgesehen sein.

Die erste und zweite Auflagefläche 16, 17 werden gemäß einer ersten erfindungsgemäßen Ausführungsform durch ein nachgiebiges und temperaturbeständiges Medium 31 ausgebildet. Dieses Medium 31 besteht aus einer Vielzahl von Borsten 32, die mit ihren freien Enden eine erste und zweite Auflagefläche 16, 17 bilden. Diese Borsten 32 sind an einem gegenüber liegenden Ende zum Auflagetisch austauschbar befestigt. Diese Borsten 32 können aus einzelnen Bürstenfeldern, Bürstenleisten oder Bürstenpinseln bestehen, welche am Auflagetisch 14 positioniert sind. Diese Borsten 32 sind beispielsweise aus metallischem Material oder aus einem Kunststoffmaterial oder auch aus Naturborsten hergestellt. Diese Materialien sind temperaturbeständig. Die einzelnen Borsten 32 weisen eine hohe Steifigkeit und/oder Packungsdichte auf, damit sie eine ausreichende Tragfähigkeit für das plattenförmige Material 12 besitzen und gleichzeitig eine ausreichende Flexibilität gegeben ist, um eine Verfahrbarkeit der Strahlfangvorrichtung 19 zu ermöglichen.

Die Borsten 32 sind bevorzugt als stabförmige Elemente mit einem runden Querschnitt ausgebildet. Alternativ können auch Borsten vorgesehen sein, die einen mehreckigen Querschnitt oder eine beliebige Freiform umfassen. Des Weiteren kann alternativ vorgesehen sein, dass die Borsten entlang ihrer Längserstreckung einen wellenlinienförmigen und/oder gedrallten Verlauf umfassen. Bei einer hohen Packungsdichte von solchen nebeneinander angeordneten Borsten zu einem Bürstenpinsel oder einer Bürstenleiste können die einzelnen Borsten zum Teil flächig aneinander liegen und dadurch eine Art Matte bilden, wodurch eine höhere Steifigkeit zur Auflage auch von schweren Werkstücken ermöglicht ist.

Beim Verfahren der Strahlfangvorrichtung in X-Richtung, wie dies in Figur 1 dargestellt ist, werden die unmittelbar dem Gehäuse 27 der Strahlfangvorrichtung 19 zugeordneten Borsten 32 aus ihrer senkrecht nach oben stehenden Position ausgelenkt. Um ein sanftes Auslenken zu ermöglichen, ist das Gehäuse 27 auf der Unterseite beispielsweise V-förmig oder an eine V-Form angenähert ausgebildet, wie dies beispielhaft dargestellt ist. Der tiefste Punkt des Gehäuses 27 kann gerundet oder auch spitz zulaufend vorgesehen sein. Dadurch ist einerseits ein sanftes Auslenken ermöglicht und andererseits wird eine Stauchung der Borsten 32 verhindert. Gleichzeitig ist ein hinreichend verbleibender Innenraum gegeben, um den einfallenden Schneidstrahl in der Strahlfangvorrichtung 19 zu absorbieren und die gleichzeitig aufgenommene Schlacke und den Staub zu entsorgen.

Eine Eintrittsöffnung 26 der Strahlfangvorrichtung 19 liegt bevorzugt in der Auflageebene der ersten und zweiten Auflagefläche 16, 17. Dies bedeutet, dass die Strahlfangvorrichtung 19 vollständig in das Medium 31 eingebettet ist. Dadurch kann eine große Auflagefläche während dem Verfahren aufrechterhalten werden, da ein Ausweichen der Borsten 32 nahezu ohne Einfluss auf die gesamte Auflagefläche 16, 17 ist.

Die Strahlfangvorrichtung 19 kann alternativ zur dargestellten Ausführungsform eine Unterseite eines Gehäuses 27 aufweisen, welche U-förmig oder elliptisch ausgebildet ist, um ein sanftes Auslenken der Borsten 32 zu erzielen und ein Stauchen zu vermeiden.

Bevorzugt sind zur Bildung der ersten und zweiten Auflagefläche 16, 17 die Borsten 32 einheitlich ausgebildet. Alternativ kann vorgesehen sein, dass in regel- oder unregelmäßigen Abständen einzelne Borsten 32 mit einer höheren Steifigkeit oder eine Gruppe von Borsten 32 mit einer höheren Steifigkeit eingebracht sind. Die Freie der Länge der Borsten 32 ist derart ausgebildet, dass diese zumindest ein vollständiges Eintauchen der Strahlfangvorrichtung 19 und ein Überfahren der Strahlfangvorrichtung 19 ermöglichen, wobei ein selbständiges Zurücksetzen der Borsten 32 in eine Tragposition ohne Verformen ermöglicht ist.

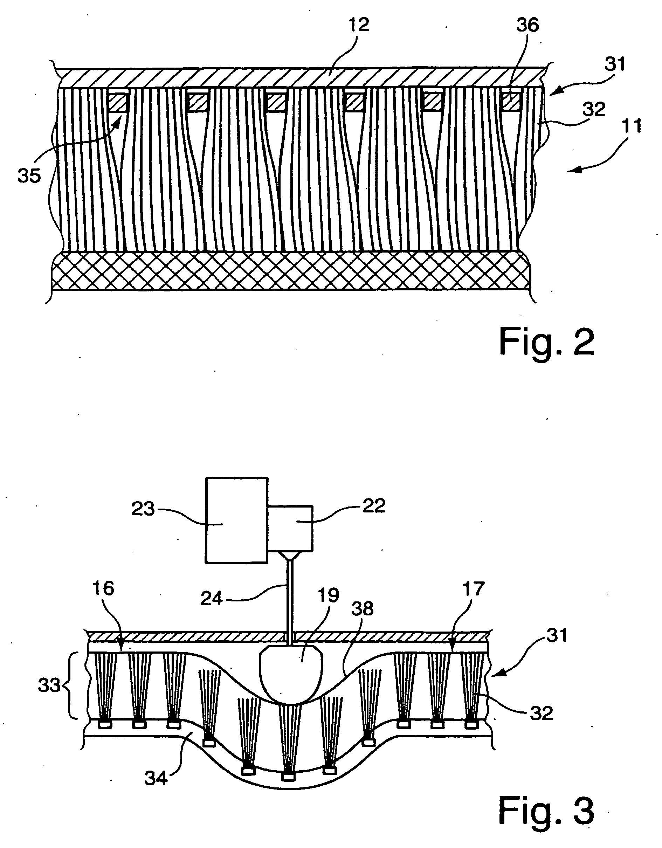

Während der Bearbeitung des plattenförmigen Materials 12 ruht dieses auf dem Auflagetisch 14 und ist über nicht näher dargestellte Haltevorrichtungen auf dem Auflagetisch 14 fixiert. Das Beladen eines plattenförmigen Materials 12 kann über diese Haltevorrichtungen erfolgen. Alternativ kann vorgesehen sein, dass eine Be- und Entladevorrichtung das plattenförmige Material 12 dem Auflagetisch 14 zuführt, wobei bevorzugt eine Be- und Entladevorrichtung vorgesehen ist, welche in Form eines Rechens 35 ausgebildet ist, wie in Figur 2 schematisch dargestellt ist. Dadurch können einzelne Zinken 36 des Rechens 35 in den durch die Borsten 32 ausgebildeten Auflagetisch eindringen und das plattenförmige Material 12 auf der Auflagefläche 16, 17 abgesetzt werden. In umgekehrter Weise kann auch ein Entladen der Gut- und Restteile erfolgen.

Die Zinken 36 sind bevorzugt auf ihrer Unterseite keilförmig oder elliptisch ausgebildet, um die Bürstenleisten, wie beispielsweise Borsten, Schaumstoff- oder Kunststoffelemente oder sonstigen stabförmigen Elemente ohne starke Biegebeanspruchung aus ihrer Ursprungslage auszulenken. Bevorzugt sind die Spitzen der Zinken 36 ebenfalls keilförmig ausgebildet, damit ein leichtes Eindringen der Zinken 36 in den Auflagetisch ermöglicht ist.

Alternativ kann vorgesehen sein, dass anstelle einzelner Zinken eine durchgehende Ebene als Schieber ausgebildet ist, welcher sich zwischen dem nachgiebigen und hitzebeständigen Medium und dem bearbeiteten plattenförmigen Material einschieben lässt. Hierzu weist diese flächige Ebene an deren Stirnseite vorzugsweise eine Schräge auf, so dass sowohl die Gut- als auch die Restteile auf diese Ebene aufgleiten können. Die Strahlfangvorrichtung 19 ist beim Be- und Entladen bevorzugt an einem entgegengesetzten Ende des Auflagetisches 14 zur Be- und Entladevorrichtung oder außerhalb des plattenförmigen Materials 12 vorgesehen, so dass Be- und Entladevorrichtung die Gut- und Restteile vollständig untergreifen kann. Alternativ kann auch vorgesehen sein, dass die Haltevorrichtungen das bearbeitete plattenförmige Material auf die Be- und Entladevorrichtung zubewegt.

Der Auflagetisch 14 kann des Weiteren eine oder mehrere Luftzuführungen aufweisen, welche an einer Unterseite der Borsten 32 vorgesehen sind. Dadurch kann eine Kühlung der Borsten 32 und auch der Auflagefläche 16, 17 erzielt werden.

In Figur 3 ist eine schematische Seitenansicht einer weiteren alternativen Ausführungsform der Erfindung dargestellt. In einem nicht näher dargestellten Auflagetisch sind als nachgiebiges und temperaturbeständiges Medium 31 Bürstenleisten vorgesehen, die als Bürstenleisten ausgebildet sind. Diese Bürstenleisten erstrecken in Y-Richtung über die Breite des Auflagetisches und werden auf beiden Seiten von einem Führungselement 34, beispielsweise einer Gliederkette, gehalten. Die Strahlfangvorrichtung 19 ist mit einer nicht näher dargestellten Kulisse gekoppelt, welche an dem Führungselement 34 angreift, so dass beim Verfahren der Strahlfangvorrichtung 19 die Bürstenleisten entsprechend abgesenkt werden. Die Strahlfangvorrichtung 19 bleibt zwischen der ersten und zweiten Auflagefläche 16, 17 eingebettet, jedoch ist ein leichtes Überfahren ohne Auslenkung der Bürstenleisten ermöglicht.

Bevorzugt ist vorgesehen, dass das nachgiebige und temperaturbeständige Medium 31 durch eine temperaturbeständige Schicht 38 abgedeckt ist. Diese temperaturbeständige Schicht 38 kann als Folie oder Gewebe, Gewirke oder Vlies ausgebildet sein. Dies ermöglicht einerseits einen Schutz der darunter sich befindenden Bürstenleisten vor Hitze oder Schmutz, wie Schlacke oder Kleinteile. Andererseits kann ein leichtes Entlanggleiten der Strahlfangvorrichtung 19 gegeben sein. Darüber hinaus wird eine einfache Entnahme des geschnittenen plattenförmigen Materials 12 ermöglicht, indem beispielsweise ein flächig ausgebildeter Schieber zwischen der Schicht 38 und dem plattenförmigen Material 12 eingebracht wird.

## Patentansprüche

1. Vorrichtung zur Aufnahme von plattenförmigen Materialien (12) für zumindest einen Trennvorgang im plattenförmigen Material (12) mit einer während des Trennvorganges bewegbaren Schneidstrahleinrichtung einer Bearbeitungsmaschine,
- mit einer ersten und einer zweiten Auflagefläche (16, 17), die gemeinsam einen Auflagetisch (14) zur Aufnahme des plattenförmigen Materials (12) bilden, und
- mit einer linienförmigen oder punktförmigen Eintrittsöffnung einer Strahlfangvorrichtung (19), die zwischen der ersten und zweiten Auflagefläche (16, 17) angeordnet ist,
**dadurch gekennzeichnet,**
- **dass** die erste und zweite Auflagefläche (16, 17) aus einem nachgiebigen und temperaturbeständigen Medium (31) ausgebildet ist, wobei als nachgiebiges und temperaturbeständiges Medium eine Vielzahl von Borsten (32) oder aneinandergereihte, aus Borsten (32) bestehende Bürsten, Bürstenpinsel oder Bürstenfelder vorgesehen sind, in welchem die Strahlfangvorrichtung (19) zumindest teilweise eingebettet ist und
- **dass** die Strahlfangvorrichtung (19) in der zumindest teilweise eingebetteten Position verfahrbar im Auflagetisch (14) vorgesehen ist.

2. Vorrichtung nach Anspruch 1, **dadurch gekennzeichnet, dass** die freie Länge der Borsten (32) zur Bildung einer ersten und zweiten Auflagefläche (16, 17) gleich lang ausgebildet sind.

3. Vorrichtung nach einem der Ansprüche 1 oder 2, **dadurch gekennzeichnet, dass** die Borsten (32) aus einem temperaturbeständigen Kunststoffmaterial, leitfähigen und temperaturbeständigen Kunststoffmaterial oder aus einem metallischen Material ausgebildet sind.

4. Vorrichtung nach einem der Ansprüche 1 bis 3, **dadurch gekennzeichnet, dass** die Borsten (32) eine hohe Eigensteifigkeit aufweisen und nach dem Verfahren der Strahlfangvorrichtung (19) ohne bleibende Verformung in eine Ausgangsposition zurückkehren.

5. Vorrichtung nach einem der vorhergehenden Ansprüche, **dadurch gekennzeichnet, dass** die in die Auflagefläche (16, 17) zumindest teilweise eingebettete Strahlfangvorrichtung (19) eine quer zur Verfahrrichtung ausgerichtete U- oder V-förmig ausgebildete Gehäuseunterseite aufweist.

6. Vorrichtung nach Anspruch 1, **dadurch gekennzeichnet, dass** als nachgiebiges und temperaturbeständiges Medium (31) aneinander gereihte aus Bürsten bestehende Bürstenleisten vorgesehen sind, die segmentweise beim Verfahren der Strahlfangvorrichtung (19) gegenüber einer Auflageebene der ersten und zweiten Auflagefläche (16, 17) nach unten absenkbar sind.

7. Vorrichtung nach Anspruch 6, **dadurch gekennzeichnet, dass** die Auslenkung der aneinander gereihte aus Bürsten bestehende Bürstenleisten durch eine Kulisse vorgesehen ist, die mit der Strahlfangvorrichtung (19) gekoppelt ist.

8. Vorrichtung nach einem der vorhergehenden Ansprüche, **dadurch gekennzeichnet, dass** auf dem nachgiebigen und temperaturbeständigen Medium (31) eine hitzebeständige und flexible Schicht (38) vorgesehen ist.

9. Vorrichtung nach Anspruch 8, **dadurch gekennzeichnet, dass** die Schicht (38) als elastisches Gewebe, Gewirke, als elastische Folie oder als Vlies ausgebildet ist.

## Claims

1. An apparatus for holding plate-like materials (12) for at least one separation process to be operated in the plate-like material (12), said apparatus having a cutting beam device of a processing machine which is movable during the separation process and is provided with
- a first and a second support surface (16, 17) which cooperate to form a support table (14) for holding the plate-like material (12), and
- a line-shaped or point-shaped entrance opening of a beam capturing device (19) that is disposed between the first and the second support surface (16, 17),
**characterised in that**
- the first and the second support surface (16, 17) are formed from a resilient and temperature-resistant medium (31) in which the beam capturing device (19) is at least partially embedded, with provision being made for the resilient and temperature-resistant medium to be formed by a plurality of bristles (32) or by brushes, bristle brushes or brush areas consisting of bristles (32) disposed next to each other, and
- that the beam capturing device (19), provided in the at least partially embedded position, is displaceable in the support table (14).

2. The device as claimed in claim 1, **characterised in that** the free portions of the bristles (32) designed to form a first and a second support surface (16, 17) are of equal length.

3. The device as claimed in any one of claims 1 or 2, **characterised in that** the bristles (32) are made from a temperature-resistant plastic material, a conductive and temperature-resistant plastic material or from a metallic material.

4. The device as claimed in any one of claims 1 to 3, **characterised in that** the bristles (32) have a high degree of inherent rigidity so as to return into their initial positions after the displacement of the beam capturing device (19) without being permanently deformed.

5. The device as claimed in any one of the preceding claims, **characterised in that** the beam capturing device (19) that is at least partially embedded in the support surface (16, 17) has a U-shaped or a V-shaped housing bottom surface oriented crosswise with respect to the direction of displacement.

6. The device as claimed in claim 1, **characterised in that** provision is made for the resilient and resistant medium (31) to be realised as brush strips consisting of brushes and disposed next to each other which are capable of being lowered segment by segment with respect to the supporting plane formed by the first and the second support surface (16, 17) as the beam capturing device (19) is being displaced.

7. The device as claimed in claim 6, **characterised in that** provision is made for the deflection of the brush strips consisting of brushes and disposed next to each other to be operated by a motion link which is coupled to the beam capturing device (19).

8. The device as claimed in any one of the preceding claims, **characterised in that** a heat-resistant and flexible layer (38) is provided on the resilient and temperature-resistant medium (31).

9. The device as claimed in claim 8, **characterised in that** the layer (38) is realised as an elastic fabric, a knitted fabric, an elastic film or as a web.

## Revendications

1. Dispositif destiné à recevoir des matériaux en forme de plaque (12) pour au moins un processus de séparation dans le matériau en forme de plaque (12) avec un dispositif à jet de coupe d'une machine d'usinage, lequel peut se déplacer pendant le processus de séparation,
- avec une première et une deuxième surface d'appui (16, 17) qui forment ensemble une table porte-pièce (14) destinée à recevoir le matériau en forme de plaque (12) , et
- avec un orifice d'entrée en forme de ligne ou en forme de point d'un dispositif de capture de jet (19), lequel est disposé entre la première et la deuxième surface d'appui (16, 17)
**caractérisé en ce que**
- la première et la deuxième surface d'appui (16, 17) sont réalisées en un support (31) souple et résistant aux écarts thermiques dans lequel le dispositif de capture de jet (19) est au moins partiellement noyé, le support souple et résistant aux écarts thermiques étant prévu en tant que pluralité de poils (32) ou en tant que brosses, pinceaux-brosses ou zones de brosse aligné(e)s, formé(e)s de poils (32),
- le dispositif de capture de jet (19) est prévu dans la table porte-pièce (14) de manière à pouvoir être déplacé lorsqu'il se trouve dans la position au moins partiellement noyée.

2. Dispositif selon la revendication 1, **caractérisé en ce que** les longueurs libres des poils (32) destinés à former une première et une deuxième surface d'appui (16, 17) sont identiques entre elles.

3. Dispositif selon l'une des revendications 1 ou 2, **caractérisé en ce que** les poils (32) sont formés en une matière plastique résistant aux écarts thermiques, une matière plastique conductrice et résistant aux écarts thermiques ou en une matière métallique.

4. Dispositif selon l'une quelconque des revendications 1 à 3, **caractérisé en ce que** les poils (32) présentent une rigidité inhérente élevée et reprennent, après le déplacement du dispositif de capture de jet (19), une position initiale sans présenter de déformation permanente.

5. Dispositif selon l'une quelconque des revendications précédentes, **caractérisé en ce que** le dispositif de capture de jet (19) au moins partiellement noyé dans la surface d'appui (16, 17) présente une partie inférieure de carter en U ou en V orientée de manière transversale au sens de déplacement.

6. Dispositif selon la revendication 1, **caractérisé en ce qu'**il est prévu comme support (31) souple et résistant aux écarts thermiques des barres porte-brosses alignées, formées par des brosses et qui sont, lors du déplacement du dispositif de capture de jet (19), abaissables segment par segment par rapport à un plan d'appui de la première et de la deuxième surface d'appui (16, 17).

7. Dispositif selon la revendication 6, **caractérisé en ce qu'**il est prévu que la déviation des barres porte-brosses alignées, formées par des brosses soit réalisée par une coulisse qui est couplée au dispositif de capture de jet (19).

8. Dispositif selon l'une quelconque des revendications précédentes, **caractérisé en ce qu'**une couche (38) flexible et thermorésistante est prévue sur le support (31) souple et résistant aux écarts thermiques.

9. Dispositif selon la revendication 8, **caractérisé en ce que** la couche (38) est réalisée sous forme de tissu élastique, de maillage, sous forme de feuille élastique ou sous forme de non-tissé.
